(19) Europäisches Patentamt / European Patent Office / Office européen des brevets

(11) **EP 2 497 787 B1**

(12) **EUROPEAN PATENT SPECIFICATION**

(45) Date of publication and mention
of the grant of the patent:
**13.01.2016 Bulletin 2016/02**

(21) Application number: **09851123.1**

(22) Date of filing: **04.11.2009**

(51) Int Cl.:
*C08F 14/06* (2006.01)     *C08F 2/18* (2006.01)
*C08F 214/06* (2006.01)

(86) International application number:
**PCT/KR2009/006465**

(87) International publication number:
**WO 2011/055867 (12.05.2011 Gazette 2011/19)**

(54) **VINYL CHLORIDE-BASED POLYMER**

AUF VINYLCHLORID BASIERENDES POLYMER

POLYMÈRE À BASE DE CHLORURE DE VINYLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**12.09.2012 Bulletin 2012/37**

(73) Proprietor: **LG Chem, Ltd.
Seoul 150-721 (KR)**

(72) Inventors:
• **AHN, Seong Yong
Yeosu-si
Jeollanam-do 555-718 (KR)**
• **KIM, Kyung Hyun
Yeosu-si
Jeollanam-do 555-050 (KR)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
WO-A1-2007/032630     WO-A1-2007/145416
JP-A- 7 041 507         JP-A- 58 007 408
JP-A- 59 168 008        JP-A- 61 016 906
KR-A- 20070 030 669     KR-A- 20070 118 441
KR-A- 20100 005 281     US-A1- 2004 152 834

Remarks:
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

[Technical Field]

The present invention disclosed herein relates to a suspension polymerization method for preparing a vinyl chloride-based polymer having excellent polymerization productivity and excellent qualities in terms of fisheye and initial colorability.

[Background Art]

Vinyl chloride-based polymers have good quality balances as well as being inexpensive and thus, have been used in wide application fields.

Vinyl chloride-based polymers may be broadly classified as a paste resin and a straight resin.

The paste resin among these resins is prepared by an emulsion polymerization method, in which a monomer, water, and a surfactant are homogenized by using a homogenizer and then transferred to a polymerization apparatus to be polymerized, and is used for wallpapers and floor papers.

Also, the straight resin is prepared by a suspension polymerization method different from the paste resin and used in various fields such as rigid and soft. Specifically, the straight resin is used for applications, such as pipes, films, and window frames, in the rigid field, and is used for applications, such as electric wire covers, wrap films, and sheets, in the soft field.

Meanwhile, as a method of reducing preparation costs of a vinyl chloride-based polymer, it is important to improve polymerization productivity per unit volume of reaction.

The foregoing method of improving polymerization productivity includes a method of increasing a yield for one batch by increasing a polymerization conversion rate while polymerization time is constantly maintained or a method of producing a high yield for unit time by reducing polymerization reaction time.

However, in consideration of the fact that a general conversion rate considering quality of a vinyl chloride-based polymer is in a range of 85% to 87%, the method of increasing the polymerization conversion rate may not greatly affect the improvement of polymerization productivity. Therefore, a lot of effort has been mainly put into reducing polymerization time in order to improve productivity of a vinyl chloride resin and simultaneously, a method of preparing stable qualities in terms of degree of polymerization, fisheye, initial colorability of the vinyl chloride-based polymer is required. However, a typically known method of preparing a vinyl chloride-based polymer has excellent polymerization productivity, but may have limitations in securing stable qualities.

A method of additionally introducing an initiator when internal pressure decreases has been suggested as the method of increasing the polymerization conversion rate of the vinyl chloride-based polymer. However, since the polymerization conversion rate is 70% or more when the internal pressure of a polymerization reactor decreases, the initiator introduced at this time insufficiently reacts with a vinyl chloride-based monomer to thus increase fisheye or microparticles. Therefore, initial colorability may decrease.

Also, a method of introducing an initiator having fast half-life during a reaction has been suggested as the method of reducing polymerization reaction time of the vinyl chloride-based polymer. However, in consideration of the fact that the vinyl chloride-based monomer is prepared by radical polymerization, since growth of a radical rapidly occurs at an initial stage and the growth becomes gradually slow during a later stage of the polymerization, the foregoing method may also have limitations in decreasing initial colorability due to an increase in fisheye or microparticles.

WO 2007/032630 A1 provides a method of preparing a vinyl chloride-based copolymer for plastisol processing. Suspension copolymerization of a vinyl chloride monomer with a comonomer having a low glass transition temperature in the presence of a buffer added at an initial stage of the copolymerization can produce a vinyl chloride-based copolymer within the good below-temperature melting property, a uniform particle size and a narrow particles size distribution.

WO 2007/145416 A1 provides a method of preparing vinyl chloride polymer having excellent processability and high bulk density by the separate stepwise additions of vinyl chloride monomer during suspension polymerization, wherein vinyl chloride monomer is suspension-polymerized in the presence of a protective colloid auxiliary and a polymerization initiator, and the vinyl chloride monomer is additionally added at least twice when the polymerization conversion is in a range of 30 to 70%.

[Disclosure]

[Technical Problem]

The present invention provides a method of preparing a vinyl chloride-based polymer including continuously and additionally introducing a vinyl chloride monomer by controlling an initial input ratio of the vinyl chloride monomer in preparing a vinyl chloride-based polymer by using a suspension polymerization.

[Technical Solution]

The present invention provides a method of suspension polymerizing a vinyl chloride-based polymer, the method comprising:

performing an initial polymerization of a vinyl chloride monomer by adding 50% to 80% of a total input amount of the vinyl chloride monomer to a solvent in the presence of a polymerization initiator and a protective colloid auxiliary; and

performing a further polymerization of vinyl chloride monomer by adding 20% to 50% of a total input amount of the vinyl chloride monomer when a polymerization conversion rate is in a range of 15% to 30%

wherein a temperature during the suspension polymerization is within a range of 30°C to 80°C,

wherein the vinyl chloride monomer of the further polymerization is continuously added when the polymerization conversion rate is in a range of 15% to 30%,

wherein 120 to 150 parts by weight of the solvent, 0.02 to 0.2 parts by weight of the polymerization initiator, and 0.03 to 5 parts by weight of the protective colloid auxiliary are mixed based on 100 parts by weight of the vinyl chloride monomer at the first polymerization.

In other embodiments, the protective colloid auxiliary may be selected from the group consisting of a vinyl alcohol-based resin having a degree of hydration ranging from about 30 wt% to about 90 wt% and a viscosity of a 4% aqueous solution ranging from about 10 cps to about 60 cps at room temperature, a cellulose having a hydroxypropyl group ranging from about 3 wt% to about 20 wt% and a viscosity of a 2% aqueous solution ranging from about 10 cps to about 20,000 cps at room temperature, and a polymer of a unsaturated organic acid.

In still other embodiments, the polymerization initiator may be selected from the group consisting of diacyl peroxides including dicumyl peroxide, di-3,5,5-trimethylhexanoyl peroxide, and dilauryl peroxide, peroxydicarbonates including diisopropyl peroxydicarbonate, di-sec-butyl peroxydicarbonate, and di-2-ethylhexyl peroxydicarbonate, peroxyesters including t-butyl peoxypivalate and t-butyl peroxyneodecanoate, azo compounds including azobis-2,4-dimethylvaleronitrile, and sulfates including potassium persulfate and ammonium persulfate.

In even other embodiments, the method may further include a vinyl-based monomer copolymerizable with the vinyl chloride monomer.

In yet other embodiments, olefin compounds including ethylene and propylene, vinyl esters including vinyl acetate, unsaturated nitriles, vinyl alkyl ethers, unsaturated fatty acids, and anhydrides of fatty acids may be used alone or in a mixture of two or more thereof as the vinyl-based monomer copolymerizable with the vinyl chloride monomer.

In further embodiments, a temperature during the polymerization may be within a range of about 30°C to about 80°C.

In other embodiments of the present invention, vinyl chloride-based polymers are prepared according to the foregoing preparation method.

[Advantageous Effects]

According to the present invention, productivity may improve and simultaneously, generation of fisheye may be low and initial colorability may be excellent.

[Best Mode]

The present invention provides a method of preparing a vinyl chloride-based polymer having better productivity. In particular, in addition to the improvement of productivity, a vinyl chloride-based polymer prepared according to the preparation method of the present invention has less generation of fisheye and excellent initial colorability.

The vinyl chloride-based polymer according to the present invention is prepared by using a suspension polymerization method and may be purely formed of a vinyl chloride monomer. However, the vinyl chloride-based polymer may be formed of a mixture of a vinyl chloride monomer as a main component and a vinyl-based monomer copolymerizable therewith. When the vinyl chloride-based polymer is formed of the mixture of the vinyl chloride monomer and the vinyl-based monomer copolymerizable therewith, a content of the vinyl chloride monomer may be 50 wt% or more.

Monomers copolymerizable with general vinyl chloride monomers, such as olefin compounds such as ethylene and propylene; vinyl esters such as vinyl acetate and vinyl propionate; unsaturated nitriles such as acrylonitrile; vinyl alkyl ethers such as vinyl methyl ether and vinyl ethyl ether; unsaturated fatty acids such as acrylic acid, methacrylic acid, itaconic acid, and maleic acid, and anhydrides of these fatty acids, may be used alone or in a mixture of two or more thereof as the vinyl-based monomer copolymerizable with a vinyl chloride monomer.

The suspension polymerization method of a vinyl chloride-based polymer according to the present invention includes controlling an input ratio of a vinyl chloride monomer to be in a range of 50% to 80% of a total input amount of the vinyl chloride monomer at an initial stage and continuously adding a remaining vinyl chloride monomer when a polymerization conversion rate is in a range of 15% to 30%.

Specifically, the initial input ratio of the vinyl chloride monomer may be 50% to 80% of the total input amount of the vinyl chloride monomer, and for example, may be 60% to 70% of the total input amount of the vinyl chloride monomer. Also, the vinyl chloride monomer may be continuously and additionally added when the polymerization conversion rate is in a range of 15% to 30%, and in particular, the addition of the vinyl chloride monomer may be started and completed when the polymerization conversion rate is in a range of 15% to 30%.

When the initial input ratio of the vinyl chloride monomer is less than 50% of the total input amount of the vinyl chloride monomer, initial colorability may be poor because microparticles increase and an effect of increasing productivity for a batch may be insignificant because polymerization time increases too much due to the continuously and additionally added vinyl chloride monomer. When the initial input ratio of the vinyl chloride monomer is more than 80% of the total input amount of the vinyl chloride monomer, an effect of increasing productivity for a batch may be insignificant because an amount of the vinyl chloride monomer to be continuously and additionally added is decreased.

Also, when the vinyl chloride monomer is continuously and additionally added when the polymerization conversion rate is less than 15%, an amount of the vinyl chloride monomer able to be continuously and additionally added is limited to be small because a decrease in volume shrinkage of a polymerization reaction system is too small due to a polymerization reaction. Therefore, the effect of increasing productivity for a batch may be insignificant.

Since specific gravity of a vinyl chloride-based polymer is large when the vinyl chloride monomer is transformed into the vinyl chloride-based polymer by a polymerization reaction, a volume shrinkage of the polymerization reaction system simultaneously occurs while the polymerization reaction occurs and the volume shrinkage of the polymerization reaction system may be calculated by the following equation.

$$[\text{Equation 1}]$$

$$V = M * C/100*(1/d_1 - 1/d_2)$$

where, V is a volume shrinkage due to a polymerization reaction, M is weight of a vinyl chloride monomer, C is a polymerization conversion rate of the vinyl chloride monomer into a vinyl chloride-based polymer, $d_1$ is specific gravity of the vinyl chloride monomer, and $d_2$ is specific gravity of the vinyl chloride-based polymer.

When the vinyl chloride monomer is continuously and additionally added when the polymerization conversion rate is more than 30%, preparation of a high-quality vinyl chloride-based polymer having stable qualities in terms of fisheye and initial colorability may be difficult because control of physical properties of the final vinyl chloride-based polymer becomes difficult. That is, since coalescence and redispersion most actively occur when the polymerization conversion rate is less than 30%, control of an internal configuration of a polymer particle may be possible. Accordingly, the vinyl chloride monomer is additionally added within the foregoing period and thus, the additionally added vinyl chloride monomer is transformed into a vinyl chloride-based polymer having a stable configuration. Therefore, an increase in polymerization productivity for a batch may be expected.

The vinyl chloride-based polymer according to the present invention is prepared by including a vinyl chloride monomer, a protective colloid auxiliary, a polymerization initiator, and a pH regulator at an initial stage of reaction. The protective colloid auxiliary is used for stably maintaining a process of preparing a vinyl chloride-based polymer and obtaining stable particles, and a vinyl alcohol-based resin having a degree of hydration ranging from 30 wt% to 90 wt% and a viscosity of a 4% aqueous solution ranging from 10 cps to 60 cps at room temperature, a cellulose having a hydroxypropyl group ranging from 3 wt% to 20 wt% and a viscosity of a 2% aqueous solution ranging from 10 cps to 2,000 cps at room temperature, and a polymer of a unsaturated organic acid may be used as the protective colloid auxiliary. A specific example of the protective colloid auxiliary may be one selected from the group consisting of an acrylic acid polymer, a methacrylic acid polymer, an itaconic acid polymer, a fumaric acid polymer, a maleic acid polymer, a succinic acid polymer, and a gelatin or may be a mixture of two or more thereof.

The protective colloid auxiliary is included in an amount of 0.03 to 5 parts by weight based on 100 parts by weight of the total vinyl chloride monomer, and for example, may be included in an amount of 0.05 to 2.5 parts by weight. When the foregoing content is used, fisheyes may not be generated because large particles are not formed and initial colorability may be excellent due to no increase in microparticles.

The initiator usable in the present invention may include diacyl peroxides such as dicumyl peroxide, dipentyl peroxide, di-3,5,5-trimethylhexanoyl peroxide, and dilauryl peroxide; peroxydicarbonates such as diisopropyl peroxydicarbonate, di-sec-butyl peroxydicarbonate, and di-2-ethylhexyl peroxydicarbonate; peroxyesters such as t-butyl peoxypivalate and t-butyl peroxyneodecanoate; azo compounds such as azobis-2,4-dimethylvaleronitrile; and sulfates such as potassium persulfate and ammonium persulfate, and these materials may be used alone or in a combination of two or more thereof. The use amount thereof may be determined by factors such as manufacturing processes, productivity, and quality, and is generally 0.02 to 0.2 parts by weight based on 100 parts by weight of the total input vinyl chloride monomer, and for example, may be 0.04 to 0.12 parts by weight.

When the use amount of the initiator is less than 0.02 parts by weight, productivity may decrease because reaction time is delayed, and when the use amount of the initiator is more than 0.2 parts by weight, thermal stability and color quality of the resin may decrease because the initiator is incompletely consumed during the polymerization reaction and remains in the final resin product.

An antioxidant usable in the present invention is not particularly limited so long as it is generally used in the preparation of the vinyl chloride-based polymer. Examples of the antioxidant may be phenol compounds such as triethylene glycol-bis-[3-(3-t-butyl-5-methyl-4-hydroxyphenyl)propionate], hydroquinone, p-methoxyphenol, t-butyl hydroxyanisole, n-octadecyl-3-(4-hydroxy-3,5-di-t-butyl phenyl)propionate, 2,5-di-t-butyl hydroquinone, 4,4-butylidenebis(3-methyl-6-t-butyl phenol), t-butyl catechol, 4,4-thio bis(6-t-butyl-m-cresol), tocopherol, and non dihydro guaretic acid; amine compounds such as N,N-diphenyl-p-phenylenediamine and 4,4-bis-(dimethylbenzyl)diphenylamine; and sulfur compounds such as dodecyl mercaptan and 1,3-diphenyl-2-thiol, and the foregoing materials may be used alone or in combination of two or more thereof.

Also, in the present invention, a polymerization regulator, a chain transfer agent, a pH regulator, an antioxidant, a cross-linking agent, an antistatic agent, a scale inhibitor, and a surfactant may be added to the polymerization system as needed before or after the polymerization, and some thereof may be separately or continuously added to the polymerization system during the polymerization.

In general, a degree of polymerization of the vinyl chloride-based polymer is determined by a polymerization reaction temperature, and since the degree of polymerization is a main factor greatly affecting processing conditions and physical properties of a product, an appropriate polymerization reaction temperature must be selected. A general polymerization temperature of vinyl chloride-based polymers produced for a commercial purpose may be in a range of 30°C to 80°C.

In a reactor used in the present invention, a shape of a stirring device, such as a stirrer or baffle, is not particularly limited and any stirring device generally used in the suspension polymerization of the vinyl chloride-based polymer may be used. Specific examples of stirring blade types of the stirrer may be a paddle type, a pitched paddle type, a bloomers gin type, a powder feeder type, a turbine type and a propeller type, and these types of stirring blades may be used alone or in a combination of two or more thereof. Examples of types of the baffles may be a plate type, a cylinder type, a D type, a loop type and a finger type.

A final vinyl chloride polymer may be prepared by removing moisture from the prepared vinyl chloride-based polymer slurry by using a fluidized bed dryer under a typical reaction condition.

Hereinafter, the present invention will be described in detail according to preferred examples for a more clearly detailed understanding of the present invention. However, the following examples are merely presented to exemplify the present invention, and the scope of the present invention is not limited thereto. Also, although only specific compounds are described in the examples of the present invention, it is obvious to those skilled in the art that the present invention is not limited thereto and the effect of the present invention can also be obtained when their equivalents are used.

Example 1

390 kg of deionized water, 130 g of di-2-ethylhexyl peroxydicarbonate, 20 g of dilauryl peroxide, and 200 g of polyvinyl alcohol having a degree of hydration of 80% and a viscosity of 4% aqueous solution of 30 cps at room temperature were introduced together into a reactor having an internal volume of 1 m$^3$ and equipped with a reflux condenser, and the reactor was evacuated, and then a reaction was performed while 230 kg of a vinyl chloride monomer was added and an initial polymerization temperature was increased to 57°C and maintained during an entire process of the polymerization reaction.

120 kg of the vinyl chloride monomer was continuously and additionally added when a polymerization conversion rate was in a range of 15% to 30%. 60 g of an antioxidant was added when the pressure of the polymerization reactor reached 6.0 kg/cm$^2$, and then unreacted monomers were collected and a polymer slurry was recovered from the polymerization reactor. The slurry thus obtained was dried in a fluidized bed dryer by using a typical method to obtain a vinyl chloride polymer.

Example 2

A vinyl chloride polymer was obtained in the same manner as Example 1 except that 240 kg of a vinyl chloride monomer was added at an initial stage of reaction and 120 kg of the vinyl chloride monomer was continuously and additionally added when a polymerization conversion rate was in a range of 15% to 30%.

Example 3

A vinyl chloride polymer was obtained in the same manner as Example 1 except that 230 kg of a vinyl chloride monomer was added at an initial stage of polymerization and 150 kg of the vinyl chloride monomer was continuously and additionally added when a polymerization conversion rate was in a range of 15% to 30%.

Example 4

A vinyl chloride polymer was obtained in the same manner as Example 1 except that 250 kg of a vinyl chloride monomer was added at an initial stage of polymerization and 130 kg of the vinyl chloride monomer was continuously and additionally added when a polymerization conversion rate was in a range of 15% to 30%.

Example 5

A vinyl chloride polymer was obtained in the same manner as Example 1 except that 280 kg of a vinyl chloride monomer was added at an initial stage of polymerization and 120 kg of the vinyl chloride monomer was continuously and additionally added when a polymerization conversion rate was in a range of 15% to 30%.

Example 6

A vinyl chloride polymer was obtained in the same manner as Example 1 except that 260 kg of a vinyl chloride monomer was added at an initial stage of polymerization and 140 kg of the vinyl chloride monomer was continuously and additionally added when a polymerization conversion rate was in a range of 15% to 30%.
In the foregoing Examples, initial input ratios of the vinyl chloride monomers of Examples 1, 2, 3, 4, 5, and 6 were about 65.7%, about 66.6%, about 60.5%, about 65.7%, about 70%, and about 65%, respectively.

Comparative Example 1

390 kg of deionized water, 130 g of di-2-ethylhexyl peroxydicarbonate, 20 g of dilauryl peroxide, and 200 g of polyvinyl alcohol having a degree of hydration of 80% and a viscosity of 4% aqueous solution of 30 cps at room temperature were introduced together into a reactor having an internal volume of 1 m$^3$ and equipped with a reflux condenser, and the reactor was evacuated, and then a reaction was performed while 300 kg of a vinyl chloride monomer was added and an initial polymerization temperature was increased to 57°C and maintained during an entire process of the polymerization reaction. 60 g of an antioxidant was added when the pressure of the polymerization reactor reached 6.0 kg/cm$^2$, and then unreacted monomers were collected and a polymer slurry was recovered from the polymerization reactor. The slurry thus obtained was dried in a fluidized bed dryer by using a typical method to obtain a vinyl chloride polymer.

Comparative Example 2

A vinyl chloride polymer was obtained in the same manner as Example 1 except that 170 kg of a vinyl chloride monomer was added at an initial stage of polymerization and 180 kg of the vinyl chloride monomer was continuously and additionally added when a polymerization conversion rate was in a range of 15% to 30%.

Comparative Example 3

A vinyl chloride polymer was obtained in the same manner as Example 1 except that 300 kg of a vinyl chloride monomer was added at an initial stage of polymerization and 30 kg of the vinyl chloride monomer was continuously and additionally added when a polymerization conversion rate was in a range of 15% to 30%.

Comparative Example 4

A vinyl chloride polymer was obtained in the same manner as Example 1 except that 300 kg of a vinyl chloride monomer was added at an initial stage of polymerization and 20 kg of the vinyl chloride monomer was continuously and additionally added when a polymerization conversion rate was in a range of 5% to 15%.

Comparative Example 5

A vinyl chloride polymer was obtained in the same manner as Example 1 except that 230 kg of a vinyl chloride monomer was added at an initial stage of polymerization and 120 kg of the vinyl chloride monomer was continuously and additionally added when a polymerization conversion rate was in a range of 40% to 50%.

Comparative Example 6

A vinyl chloride polymer was obtained in the same manner as Example 1 except that 300 kg of a vinyl chloride monomer was added at an initial stage of polymerization, 50 kg of the vinyl chloride monomer was additionally added when a polymerization conversion rate was in a range of 15% to 30%, and 50 kg of the vinyl chloride monomer was additionally added when a polymerization conversion rate was in a range of 30% to 80%.

In the foregoing Comparative Examples, a total amount of the vinyl chloride monomer was added at an initial stage in Comparative Example 1, and initial input ratios of the vinyl chloride monomers of Comparative Examples 2, 3, 4, and 5 were about 48.5%, about 90.9%, about 94%, and about 65.7%, respectively.

Experimental Example

Specific experimental conditions, basic physical properties, and processing properties of the products according to the foregoing Examples and Comparative Examples were measured below and the measurement results thereof are presented in the following Tables 1 and 2.

1) Polymerization productivity evaluation: yields of poly vinyl chloride (PVC) polymers produced for a batch per unit time were measured.

2) Degree of polymerization measurement: measured according to ASTM D1243-79.

3) Average particle diameter measurement: measured according to ASTM D1705.

4) Initial colorability evaluation

1 part by weight of a tin-based stabilizer, 0.5 parts by weight of a lead-based stabilizer, 1.5 parts by weight of a stabilizer, and 45 parts by weight of a plasticizer were mixed based on 100 parts by weight of the obtained polymer and kneaded at 150°C for 5 minutes by using rolls, and then a sheet was obtained. The sheet was cut and laminated to prepare a compressed sheet through press forming. The sheet was visually observed and evaluated by the following standard.

◎: based on Comparative Example 1, a level of having the same degree of coloration as Comparative Example 1 and no limitations in practical use.

O: based on Comparative Example 1, a level of having somewhat inferior to normal degree of coloration and no limitations in practical use.

x: different degree of coloration in comparison to that of Comparative Example 1 and a level of having different tone and limitations in practical use.

5) Amount of fisheye

100 parts by weight of a vinyl chloride-based polymer, 45 parts by weight of dioctyl phthalate (DOP), 0.1 parts by weight of barium stearate, 0.2 parts by weight of a tin-based stabilizer, and 0.1 parts by weight of carbon black were mixed and kneaded for 6 minutes by using 6 inch rolls, and then a 0.3 mm thick sheet was prepared and the amount of fisheye was expressed as the number of white transparent particles in 100 cm$^2$ of the sheet.

[Table 1]

| Measurement item | Unit | Example 1 | Example 2 | Example 3 | Example 4 | Example 5 | Example 6 | Average value |
|---|---|---|---|---|---|---|---|---|
| Polymerization time | Min | 303 | 308 | 319 | 315 | 325 | 327 | 316 |
| Polymerization yield | Kg | 280 | 288 | 301 | 304 | 322 | 319 | 302 |
| Polymerization yield per unit time | Kg/day | 1331 | 1346 | 1359 | 1390 | 1427 | 1405 | 1376 |
| | Kg/year MT/year | 485703 486 | 491470 491 | 495942 496 | 507246 507 | 520748 521 | 512741 513 | 502308 502 |
| Degree of polymerization | | 1030 | 1030 | 1030 | 1030 | 1030 | 1025 | 1029 |
| Average particle diameter | $\mu$m | 148 | 150 | 149 | 151 | 152 | 151 | 149 |
| Fisheye | Number | 1 | 2 | 2 | 2 | 2 | 3 | 2 |
| Initial colorability | | ○ | ◎ | ○ | ◎ | ◎ | ◎ | ◎ |

As shown in Table 1, Examples 1 to 6 showed almost the same levels of results in terms of degree of polymerization, average particle diameter, fisheye, and initial colorability, and also showed overall high values of polymerization yields per unit time.

[Table 2]

| Measurement item | Unit | Comparative Example 1 | Comparative Example 2 | Comparative Example 3 | Comparative Example 4 | Comparative Example 5 | Comparative Example 6 |
|---|---|---|---|---|---|---|---|
| Polymerization time | Min | 300 | 315 | 305 | 302 | 310 | 345 |
| Polymerization yield | Kg | 255 | 270 | 276 | 272 | 267 | 315 |
| Polymerization yield per unit time | Kg/day | 1224 | 1234 | 1303 | 1297 | 1240 | 1314 |
| | Kg/year MT/year | 446760 447 | 450514 450 | 475625 476 | 473388 473 | 452694 453 | 479896 480 |
| Degree of polymerization | | 1020 | 1030 | 1025 | 1020 | 1030 | 1030 |
| Average particle diameter | $\mu$m | 150 | 143 | 152 | 151 | 156 | 165 |
| Fisheye | Number | 3 | 2 | 2 | 2 | 8 | 32 |
| Initial colorability | | ◎ | x | ○ | ○ | ○ | ○ |

EP 2 497 787 B1

As shown in the results of Table 2, with respect to Comparative Example 1, a typical polymerization method was used in which a total amount of the vinyl chloride monomer was introduced at an initial stage, and the initial input ratio of the vinyl chloride monomer was too low with respect to Comparative Example 2 and thus, polymerization time became too long due to the continuously and additionally added vinyl chloride monomer. Therefore, it may be understood that polymerization productivity for a batch was almost not increased. Also, the results showed poor initial colorabilities. With respect to Comparative Example 3, the initial input ratio of the vinyl chloride monomer was so high that an amount of the vinyl chloride monomer to be added continuously and additionally was decreased. Therefore, an effect of increasing polymerization productivity for a batch was insignificant. With respect to Comparative Example 4, since the vinyl chloride monomer was additionally added when the polymerization conversion rate was less than 15%, an amount of the vinyl chloride monomer able to be continuously and additionally added was decreased, and thus, the effect of increasing polymerization productivity for a batch was insignificant. With respect to Comparative Example 5, since the vinyl chloride monomer was additionally added when the polymerization conversion rate was more than 30%, the number of fisheyes was increased and the effect of increasing polymerization productivity was also insignificant. With respect to Comparative Example 6, although the vinyl chloride monomer was introduced when the polymerization conversion rate was in a range of 15% to 30%, the input was completed when the polymerization conversion rate was 80%. As a result, it may be understood that polymerization time became too long and the number of fisheyes was increased.

It may be understood from the results of Tables 1 and 2 that polymerization yields of Examples of the present invention were significantly increased in comparison to those of Comparative Examples.

## Claims

1.  A method of suspension polymerizing a vinyl chloride-based polymer, the method comprising:

    performing an initial polymerization of a vinyl chloride monomer by adding 50% to 80% of a total input amount of the vinyl chloride monomer to a solvent in the presence of a polymerization initiator and a protective colloid auxiliary; and
    performing a further polymerization of vinyl chloride monomer by adding 20% to 50% of a total input amount of the vinyl chloride monomer when a polymerization conversion rate is in a range of 15% to 30%
    wherein a temperature during the suspension polymerization is within a range of 30°C to 80°C,
    wherein the vinyl chloride monomer of the further polymerization is continuously added when the polymerization conversion rate is in a range of 15% to 30%,
    wherein 120 to 150 parts by weight of the solvent, 0.02 to 0.2 parts by weight of the polymerization initiator, and 0.03 to 5 parts by weight of the protective colloid auxiliary are mixed based on 100 parts by weight of the vinyl chloride monomer at the first polymerization.

2.  The method of claim 1, wherein the protective colloid auxiliary is selected from the group consisting of a vinyl alcohol-based resin having a degree of hydration ranging from 30 % to 90 wt% and a viscosity of a 4% aqueous solution ranging from 10 cps to 60 cps at room temperature, a cellulose having a hydroxypropyl group ranging from 3 wt% to 20 wt% and a viscosity of a 2% aqueous solution ranging from 10 cps to 20,000 cps at room temperature, and a polymer of a unsaturated organic acid.

3.  The method of claim 1, wherein the polymerization initiator is selected from the group consisting of diacyl peroxides including dicumyl peroxide, di-3,5,5-trimethylhexanoyl peroxide, and dilauryl peroxide; peroxydicarbonates including diisopropyl peroxydicarbonate, di-sec-butyl peroxydicarbonate, and di-2-ethylhexyl peroxydicarbonate; peroxyesters including t-butyl peoxypivalate and t-butyl peroxyneodecanoate; azo compounds including azobis-2,4-dimethylvaleronitrile; and sulfates including potassium persulfate and ammonium perfsulfate.

4.  The method of claim 1, further comprising a vinyl-based monomer copolymerizable with the vinyl chloride monomer.

5.  The method of claim 4, wherein olefin compounds including ethylene and propylene, vinyl esters including vinyl acetate, unsaturated nitriles, vinyl alkyl ethers, unsaturated fatty acids, and anhydrides of fatty acids are used alone or in a mixture of two or more thereof as the vinyl-based monomer copolymerizable with the vinyl chloride monomer.

## Patentansprüche

1.  Verfahren zur Suspensionspolymerisation eines Polymers auf Basis von Vinylchlorid, wobei das Verfahren umfasst:

Durchführen einer Anfangspolymerisation eines Vinylchloridmonomers durch Zugabe von 50% bis 80% einer gesamten Aufgabemenge des Vinylchloridmonomers zu einem Lösungsmittel in der Gegenwart eines Polymerisationsinitiators und eines Schutzcolloidhilfsstoffs; und

Durchführen einer weiteren Polymerisation von Vinylchloridmonomer durch Zugabe von 20% bis 50% einer gesamten Aufgabemenge des Vinylchloridmonomers, wenn eine Polymerisationsumsetzungsrate in einem Bereich von 15% bis 30% ist,

wobei eine Temperatur während der Suspensionspolymerisation innerhalb eines Bereichs von 30°C bis 80°C ist,

wobei das Vinylchloridmonomer der weiteren Polymerisation kontinuierlich zugegeben wird, wenn die Polymerisationsumsetzungsrate in einem Bereich von 15% bis 30% ist,

wobei 120 bis 150 Gewichsteile des Lösungsmittels, 0,02 bis 0,2 Gewichsteile des Polymerisationsinitiators und 0,03 bis 5 Gewichsteile des Schutzcolloidhilfsstoffs basierend auf 100 Gewichststeilen des Vinylchloridmonomers bei der ersten Polymerisation vermischt werden.

2. Verfahren nach Anspruch 1, wobei der Schutzcolloidhilfsstoff ausgewählt wird aus der Gruppe bestehend aus einem Harz auf Basis von Vinylalkohol mit einem Hydratationsgrad im Bereich von 30% bis 90 Gew.-% und eine Viskosität einer 4%igen wässrigen Lösung im Bereich von 10 cps bis 60 cps bei Raumtemperatur, einer Cellulose mit einer Hydroxypropylgruppe im Bereich von 3 Gew.-% bis 20 Gew.-% und einer Viskosität einer 2%igen wässrigen Lösung im Bereich von 10 cps bis 20.000 cps bei Raumtemperatur, und einem Polymer einer ungesättigten organischen Säure.

3. Verfahren nach Anspruch 1, wobei der Polymerisationsinitiator ausgewählt wird aus der Gruppe bestehend aus Diacylperoxiden einschließend Dicumylperoxid, Di-3,5,5-trimethylhexanoylperoxid und Dilaurylperoxid; Peroxydicarbonaten einschließend Diisopropylperoxydicarbonat, Di-sec-butyl-peroxydicarbonat und Di-2-ethylhexylperoxydicarbonat; Peroxyestern einschließend t-Butylperoxypivalat und t-Butylperoxyneodecanoat; Azo-Verbindungen einschließend Azobis-2,4-dimethylvaleronitril; und Sulfaten einschließend Kaliumpersulfat und Ammoniumpersulfat.

4. Verfahren nach Anspruch 1, weiter umfassend ein Monomer auf Vinylbasis, das mit dem Vinylchloridmonomer copolymerisierbar ist.

5. Verfahren nach Anspruch 4, wobei Olefinverbindungen einschließend Ethylen und Propylen, Vinylester einschließend Vinylacetat, ungesättigte Nitrile, Vinylalkylether, ungesättigte Fettsäuren und Anhydride von Fettsäuren alleine oder in einer Mischung von zwei oder mehr derselben als das Monomer auf Vinylbasis, das mit dem Vinylchloridmonomer copolymerisierbar ist, verwendet werden.

## Revendications

1. Procédé de polymérisation en suspension d'un polymère à base de chlorure de vinyle, le procédé comprenant :

la réalisation d'une polymérisation initiale d'un monomère de chlorure de vinyle par addition de 50 % à 80 % d'une quantité introduite totale du monomère de chlorure de vinyle dans un solvant en la présence d'un amorceur de polymérisation et d'un auxiliaire colloïdal protecteur ; et

la réalisation d'une polymérisation supplémentaire du monomère de chlorure de vinyle par addition de 20 % à 50 % d'une quantité introduite totale du monomère de chlorure de vinyle quand le taux de conversion par polymérisation est dans une plage de 15 % à 30 %,

dans lequel une température pendant la polymérisation en suspension est dans une plage de 30 °C à 80 °C,

dans lequel le monomère de chlorure de vinyle de la polymérisation supplémentaire est ajouté en continu quand le taux de conversion par polymérisation est dans une gamme de 15 % à 30%,

dans lequel de 120 à 150 parties en poids du solvant, de 0,02 à 0,2 partie en poids de l'amorceur de polymérisation et de 0,03 à 5 parties en poids de l'auxiliaire colloïdal protecteur sont mélangées sur la base de 100 parties en poids du monomère de chlorure de vinyle à la première polymérisation.

2. Procédé de la revendication 1, dans lequel l'auxiliaire colloïdal protecteur est sélectionné dans le groupe consistant en les suivants : résine à base d'alcool vinylique dont le degré d'hydratation va de 30 % à 90 % en poids et dont la viscosité en solution aqueuse à 4 % va de 10 cP à 60 cP à température ambiante, cellulose à groupement hydroxypropyle dont le degré d'hydratation va de 3 % en poids à 20 % en poids et dont la viscosité en solution aqueuse à 2 % va de 10 cP à 20 000 cP à température ambiante et polymère d'un acide organique insaturé.

3. Procédé de la revendication 1, dans lequel l'amorceur de polymérisation est sélectionné dans le groupe consistant en les suivants : peroxydes de diacyle, y compris le peroxyde de dicumyle, le peroxyde de di-3,5,5-triméthylhexanoyle et le peroxyde de dilauryle ; peroxydicarbonates, y compris le peroxydicarbonate de diisopropyle, le peroxydicarbonate de di-sec-butyle et le peroxydicarbonate de di-2-éthylhexyle ; peroxyesters, y compris le peroxypivalate de *t*-butyle et le peroxynéodécanoate de *t*-butyle ; composés azoïques, y compris l'azobis-2,4-diméthylvaléronitrile ; et sulfates, y compris le persulfate de potassium et le persulfate d'ammonium.

4. Procédé de la revendication 1 comprenant en outre un monomère à base de vinyle copolymérisable avec le monomère de chlorure de vinyle.

5. Procédé de la revendication 4, dans lequel des composés oléfiniques, y compris l'éthylène et le propylène, des esters de vinyle, y compris l'acétate de vinyle, des nitriles insaturés, des éthers d'alkyle et de vinyle, des acides gras insaturés et des anhydrides d'acides gras sont utilisés séparément ou dans un mélange de deux ou plusieurs de ceux-ci comme monomère à base de vinyle copolymérisable avec le monomère de chlorure de vinyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007032630 A1

- WO 2007145416 A1